Europäisches Patentamt

European Patent Office

Office européen des brevets

(11) Veröffentlichungsnummer: **0 430 868 A1**

## EUROPÄISCHE PATENTANMELDUNG

(21) Anmeldenummer: 90810826.9

(22) Anmeldetag: 29.10.90

(51) Int. Cl.⁵: **G02B 6/245**

(30) Priorität: 09.11.89 CH 4044/89
01.10.90 CH 3148/90

(43) Veröffentlichungstag der Anmeldung:
05.06.91 Patentblatt 91/23

(84) Benannte Vertragsstaaten:
AT BE CH DE DK ES FR GB GR IT LI LU NL SE
Patentblatt

(72) Erfinder: **Schmocker, René**
**Ahornstrasse**
**CH-3714 Frutigen(CH)**
Erfinder: **Marazzi, Silvio**

**CH-6654 Cavigliano(CH)**
Erfinder: **Kalas, Vladimir**
**Via Case Albertini 2**
**CH-6616 Losone(CH)**

(71) Anmelder: **DIAMOND S.A.**
**Via dei Patrizi 5**
**CH-6616 Losone-Locarno(CH)**

(74) Vertreter: **Wenger, René et al**
**Hepp, Wenger & Partner AG Marktgasse 18**
**CH-9500 Wil(CH)**

(54) **Verfahren und Vorrichtung zum Abisolieren der Endabschnitte optischer Kabel.**

(57) Der zwischen dem Innenmantel (3) und dem Aussenmantel (7) liegende Fasermantel (6) eines optischen Kabels (1) wird mit einer Düse (10) angeblasen und derart auf eine Seite weggebogen. Der Fasermantel kann so in einer Klemmvorrichtung (11) erfasst und mit einer Trennvorrichtung (9) durchgetrennt werden. Das Auslenken des Fasermantels ermöglicht ein wirkungsvolles Durchtrennen ohne Rücksicht auf den empfindlichen Lichtwellenleiter (2).

FIG.3

EP 0 430 868 A1

# VERFAHREN UND VORRICHTUNG ZUM ABISOLIEREN DER ENDABSCHNITTE OPTISCHER KABEL

Die Erfindung betrifft ein Verfahren zum Abisolieren der Endabschnitte optischer Kabel gemäss dem Oberbegriff von Anspruch 1, sowie eine Vorrichtung zur Durchführung des Verfahrens gemäss dem Oberbegriff von Anspruch 9.

Im Gegensatz zu konventionellen elektrischen Kabeln ist das Abisolieren von optischen Kabeln aufwendiger und schwieriger, da der Lichtwellenleiter äusserst empfindlich ist und da dieser mehrere Schutzschichten aufweist. Das Abisolieren erfolgt daher heute noch weitgehend von Hand mit Hilfe von Handwerkzeugen. Hilfsvorrichtungen zum Abisolieren sind zwar teilweise bereits bekannt, erlauben aber noch keine vollständige Automatisierung.

So ist z.B. durch die DE-A-34 06 917 eine Vorrichtung zum Ablösen der auf die Glasfaser von Lichtwellenleitern aufgebrachten Beschichtung bekannt geworden, die bewegliche, halbkreisförmig ausgeschliffene Schneiden aufweist. Die Schneiden sind derart mit einer Leiterführung verbunden, dass der Lichtwellenleiter zentriert wird und dass die Eindringtiefe der Schneiden auf eine vorgegebene Tiefe begrenzt wird. Die abzulösende Beschichtung lässt sich mit einer Heizung erwärmen, was den Ablösevorgang erleichtert. Mit einer derartigen Vorrichtung lässt sich zwar der Aussenmantel und ggf. der Innenmantel des Kabels in separaten Arbeitsschritten ablösen. Der ausserordentlich zähe Fasermantel lässt sich dagegen mit den radial beweglichen Schneiden nicht oder nur unvollständig durchtrennen. Er muss daher nach dem Entfernen des Aussernantels manuell mit einer Schere abgeschnitten werden.

Der zunehmende Einsatz von Glasfaserkabeln erfordert eine rationelle Herstellung von Steckerverbindungen. Zu diesem Zweck muss auch das Abisolieren automatisiert werden können, um einerseits die Bearbeitungszeit zu reduzieren und um anderseits möglichst gleichförmig bearbeitete Endabschnitte zu erhalten. Es ist daher eine Aufgabe der Erfindung, ein Verfahren der eingangs genannten Art zu schaffen, mit dessen Hilfe die Endabschnitte auf rationelle Weise bis auf den Lichtwellenleiter abisoliert werden können, ohne dass Handwerkzeuge eingesetzt werden müssen. Insbesondere soll auch die Durchtrennung des Fasermantels automatisch erfolgen. Eine weitere Aufgabe der Erfindung besteht schliesslich in der Schaffung einer Vorrichtung, mit der das Verfahren auf einfache Weise durchgeführt werden kann und die sich möglichst vielseitig einsetzen lässt, so dass unterschiedliche Kabel bearbeitet werden können. Diese Aufgabe wird in verfahrensmässiger Hinsicht mit einem Verfahren gelöst, dass die Merkmale von Anspruch 1 aufweist.

Das Wegbiegen des Fasermantels durch Anblasen oder Ansaugen ermöglicht es auf einfachste Weise, den Fasermantel zu erfassen und abzutrennen. Da der Fasermantel aus einer Vielzahl haarartiger Fäden besteht, lässt er sich ohne weiteres um etwa 90° wegbiegen, so dass der Lichtwellenleiter mit dem Innenmantel vollständig freigelegt wird. Der Innenmantel hat im Vergleich zum Fasermantel eine um ein vielfaches grössere Biegesteifigkeit, so dass er durch den Blas- oder Saugvorgang nicht beeinflusst wird. Das Wegbiegen des Fasermantels erlaubt es nun, ein wirksames Trennwerkzeug anzusetzen, ohne dass auf den empfindlichen Lichtwellenleiter Rücksicht genommen werden muss.

Vor oder nach dem Abtrennen des Fasermantels kann der Innenmantel auf schonende Weise zuerst eingeschnitten und anschliessend ggf. unter Wärmezufuhr abgezogen werden. Der Innenmantel könnte aber auch noch auf andere Weise entfernt werden. So könnte er z.B. in ein Lösungsmittelbad eingetaucht und derart abgelöst werden.

Der Fasermantel kann mit einer relativ zum Kabel verschiebbaren Trennscheibe abgetrennt werden. Die Trennscheibe gewährleistet ein saüberes Durchtrennen des relativ zähen Fasermantels. Aber auch andere Trennwerkzeuge wie z.B. ein oszillierendes Schneidmesser oder eine Schere wären denkbar. Noch vorteilhafter ist es jedoch, wenn der Fasermantel zwischen zwei Backen gehalten wird, von denen wenigstens eine einen etwa keilförmigen Querschnitt aufweist und wenn die Backen bis zur vollständigen Trennung des Fasermantels gegeneinander gepresst werden.

Das Verfahren lässt sich besonders einfach automatisieren, wenn die Endabschnitte durch eine Transportvorrichtung erfasst und sequentiell an verschiedene Arbeitsstationen geführt werden und wenn an jeder Arbeitsstation nach jedem Vorschubtakt jeweils ein Arbeitsgang ausgeführt wird. Auf diese Weise entstehen keine Totzeiten an den einzelnen Arbeitsstationen, da jede Arbeitsstation bei jedem Takt mit einem Endabschnitt bestückt ist. Die Endabschnitte können aber auch stationär gehalten werden, während verschiedene Arbeitswerkzeuge sequentiel 1 herangeführt und wieder entfernt werden.

In vorrichtungsmässiger Hinsicht wird die Aufgabe mit einer Vorrichtung mit den Merkmalen von Anspruch 9 gelöst. Die Elemente der Trennvorrichtung, nämlich Düse, Klemmvorrichtung und Trennelement können auf ganz unterschiedliche Weise realisiert werden. Vorzugsweise hat die Klemmvorrichtung ein Klemmlager zur Aufnahme des abgebogenen Fasermantels und ein gegen das Klemmlager pressbares Klemmelement. Das Klemmlager kann dabei einen Halteabschnitt aufweisen, in dem der Fasermantel bei geschlossenem Klemmelement frei spannbar ist, wobei das Trennelement in den Halteabschnitt einführbar ist. Das Anspannen des Fasermantels im Halteabschnitt ist wichtig, um einen sauberen Schnitt zu gewährleisten.

Die einzelnen Arbeitsschritte können an separaten Arbeitsstationen erfolgen, wobei die Endabschnitte mit Hilfe einer Transportvorrichtung von einer Station zur anderen befördert werden. Die Transportvorrichtung kann zu diesem Zweck Klemmzangen aufweisen, welche zwischen den Arbeitsstationen hin und her pendeln und auf diese Weise die Endabschnitte weiterbefördern. Die Klemmzangen könnten aber auch an einer endlosen Förderkette befestigt sein, welche taktweise vorwärts bewegt wird. Auf diese Weise blieben die Endabschnitte von der ersten bis zur letzten Arbeitsstation in der gleichen Klemmzange eingespannt.

Eine einfache und übersichtliche Gruppierung der Arbeitsstationen ergibt sich, wenn diese etwa linear angeordnet sind und wenn die Klemmzangen an einer beweglichen Förderleiste angeordnet sind. Der lineare Vorschub führt zu keiner Verdrehung der Kabel, da die Arbeitsstationen relativ eng nebeneinander angeordnet werden können. Ausserdem kann eine Bedienungsperson alle Arbeitsstationen gut überblicken. Die Klemmzangen lassen sich mit einem gemeinsamen Betätigungselement simultan aktivieren. Denkbar wäre aber auch ein rotativer Vorschub, z.B. indem die Klernzangen an einem Drehtisch angeordnet sind, der sich an den fest angeordneten Arbeitsstationen vorbeidreht.

Weitere Vorteile und Einzelmerkmale der Erfindung ergeben sich aus der nachfolgenden Beschreibung von Ausführungsbeispielen und aus den Zeichnungen. Es zeigen:

Fig. 1 den Endabschnitt eines optischen Kabels,
Fig. 2 das Einschneiden und Abziehen des Aussenmantels,
Fig. 3 das Wegbiegen und Festklemmen des Fasermantels,
Fig. 4 das Einschneiden des Innenmantels,
Fig. 5 das Erwärmen und Abziehen des Innenmantels,
Fig. 6 den fertig abisolierten Endabschnitt,
Fig. 7 eine Seitenansicht einer erfindungsgemässen Vorrichtung in stark vereinfachter Darstellungsweise,
Fig. 8 eine Draufsicht auf eine erfindungsgemässe Vorrichtung mit verschiedenen Arbeitsstationen,
Fig. 9 einen Längsschnitt durch die Transportvorrichtung,
Fig.10 einen Querschnitt durch die Transportvorrichtung gemäss Figur 9,
Fig.11 einen Querschnitt durch die Trennvorrichtung,

tung,
Fig.12 eine Draufsicht auf die Trennvorrichtung gemäss Figur 11,
Fig.13 ein alternatives Ausführungsbeispiel der Erfindung mit stationärer Einspannstelle beim Entfernen des Aussenmantels,
Fig.14 die Vorrichtung gemäss Figur 13 beim Abbiegen des Fasermantels,
Fig.15 die Vorrichtung gemäss Figur 14 beim Entfernen des Innenmantels,
Fig.16 eine Vorderansicht der Vorrichtung gemäss Figur 15,
Fig.17 ein alternatives Ausführungsbeispiel einer Trennvorrichtung, und
Fig.18 - 20 verschiedene Ausführungsformen von Trennbacken an der Vorrichtung gemäss Figur 17.

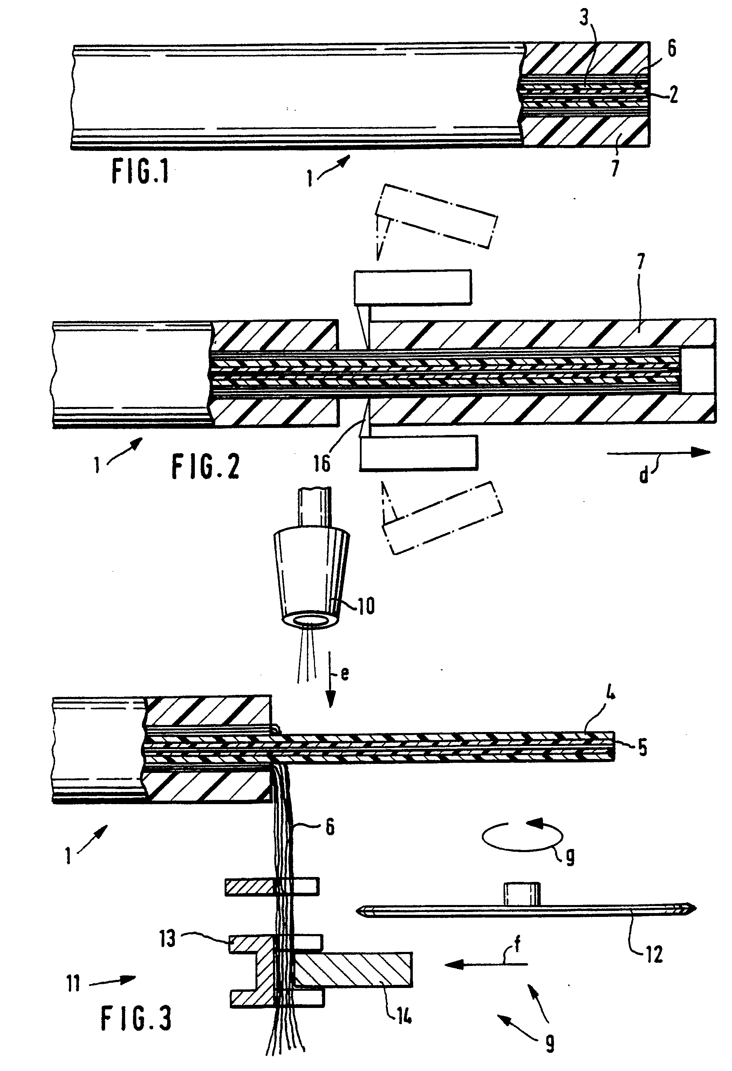

In den Figuren 1 bis 6 ist der Abisoliervorgang an einem stark vergrösserten optischen Kabel in den einzelnen Arbeitsschritten schematisch dargestellt. Das optische Kabel 1 besteht aus dem eigentlichen Lichtwellenleiter 2 in der Form einer Glasfaser, die von verschiedenen Umhüllungen geschützt ist. Unmittelbar um den Lichtwellenleiter ist ein Innenmantel 3 angeordnet, der in der Regel jedoch zweistufig aufgebaut ist und eine sogenannte Ader 4 aus Kunststoffmaterial und ein Microcoating 5 z.B. aus Silikon aufweist. Um den Innenmantel 3 legt sich ein Fasermantel 6 aus einem Bündel sehr zäher und hochzugfester Fasern. Dieser Fasermantel dient der Zugentlastung des Leiters, schützt aber auch vor anderen mechanischen Beeinflussungen, wie z.B. Schlägen, Abknickungen usw. Der Fasermantel kann z.B. aus Glasgarn oder aus Aramid (z.B. KEVLAR, eingetragenes Warenzeichen) oder aus einem Gemisch dieser Materialien gefertigt sein.

Der Fasermantel ist von einem Aussenmantel 7 umgeben, der eine vergleichsweise grosse Wandstärke aufweist und der aus Kunststoffmaterial gefertigt ist.

Das dargestellte optische Kabel hat in Wahrheit einen Aussendurchmesser von ca. 2 bis 4mm, während der Aussendurchmesser des Innenmantels 3 noch ca. 0,9mm beträgt. Der Durchmesser des Lichtwellenleiters ist kleiner als 0,2mm, was eine äusserst vorsichtige Handhabung beim Abisolieren erfordert.

Wie aus Figur 2 ersichtlich, wird zunächst der Aussenmantel 7 mit Hilfe von Schneidmessern 16 bis zum Fasermantel einge schnitten und dann abgezogen. Dies kann mit einem Werkzeug erfolgen, dass nach dem allgemeinen Arbeitsprinzip von Abisolierzangen arbeitet, wobei die Einschnittiefe eingestellt werden kann. Das Abziehen des Aussenmantels 7 erfolgt koaxial zum Lichtwellenleiter in Pfeilrichtung d. Dabei können entweder die Schneidmesser 16 bewegt werden oder es könnte bei stillstehenden Schneidmessern auch das restliche Kabel zurückgezogen werden.

Figur 3 zeigt das Wegbiegen des Fasermantels 6 mit Hilfe einer Blasdüse 10, die in Pfeilrichtung e z.B. Pressluft etwa im rechten Winkel gegen das optische Kabel 1 bläst. Der Fasermantel kann so in einer Klemmvorrichtung 11 festgehalten werden. Die Klemmvorrichtung weist ein Klemmlager 13 auf, das als Widerlager für ein Klemmelement, z.B. für einen Schwenkarm 14 dient. Nach dem Festhalten des Fasermantels 6 wird ein Trennelement, wie z.B. eine Trennscheibe 12 in Pfeilrichtung f gegen den Fasermantel bewegt. Die Trennscheibe dreht sich in Pfeilrichtung g mit relativ grosser Drehzahl, so dass ein sauberer Schnitt gewährleistet wird. Die Klemmvorrichtung 11 und die Trennscheibe 12 sind Bestandteil einer Trennvorrichtung 9, die aber auch andere Elemente aufweisen könnte. Die Trennscheibe könnte sich auch von einer anderen Seite her dem Fasermantel nähern.

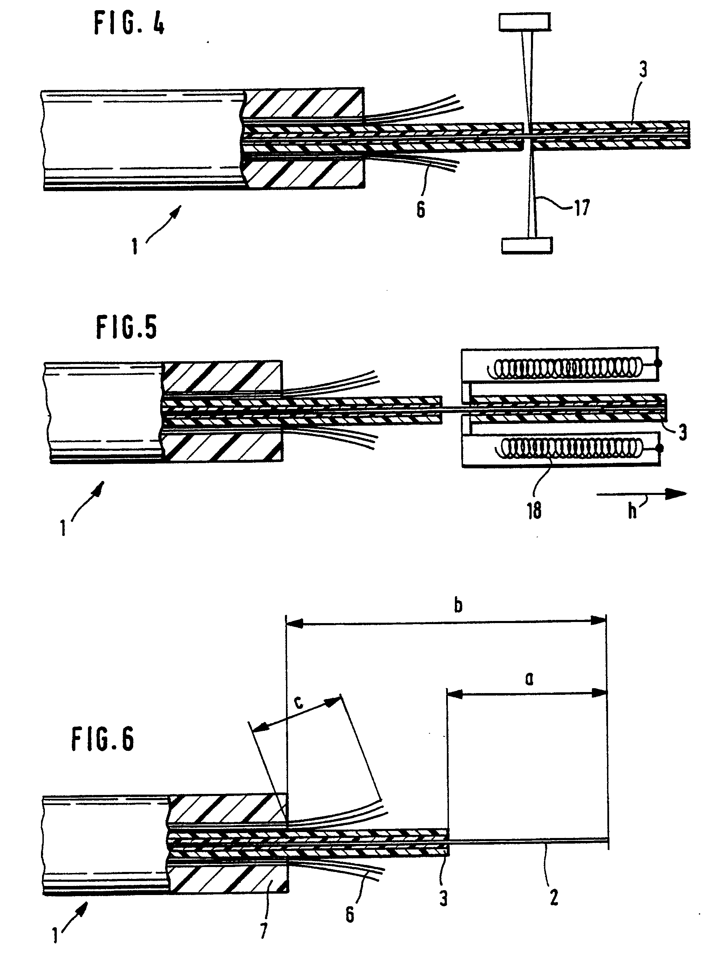

Figur 4 zeigt den vom Aussenmantel und vom Fasermantel befreiten Innenmantel 3. Vom Fasermantel 6 ist nur noch ein kurzer Faserbart sichtbar, der die weitere Bearbeitung jedoch nicht stört. Jetzt wird mit Hilfe der Schneidmesser 17 der Innenmantel 3 bis auf das Microcoating eingeschnitten.

Das Ablösen des Innenmantels erfordert äusserste Vorsicht und erfolgt daher in einem separaten Arbeitsgang gemäss Figur 5. Der bereits eingeschnittene Innenmantel 3 wird von Heizbacken erfasst und in Pfeilrichtung h abgezogen. Es ist allerdings denkbar, dass der Innenmantel in einem einzigen Arbeitsgang mit einem Werkzeug entfernt wird. Der Innenmantel kann auch ohne weiteres in der Position gemäss Figur 3 bereits vor dem Abtrennen des Fasermantels entfernt werden.

Figur 6 zeigt das fertig abisolierte Kabel nach dem Durchlaufen sämtlicher Verfahrensschritte. Die einzelnen Abisoliermasse a und b sowie die Länge c des verbleibenden Faserbartes können eingestellt werden. Diese Masse richten sich z.B. nach den optischen Steckern, die mit dem Endabschnitt des optischen Kabels verbunden werden sollen.

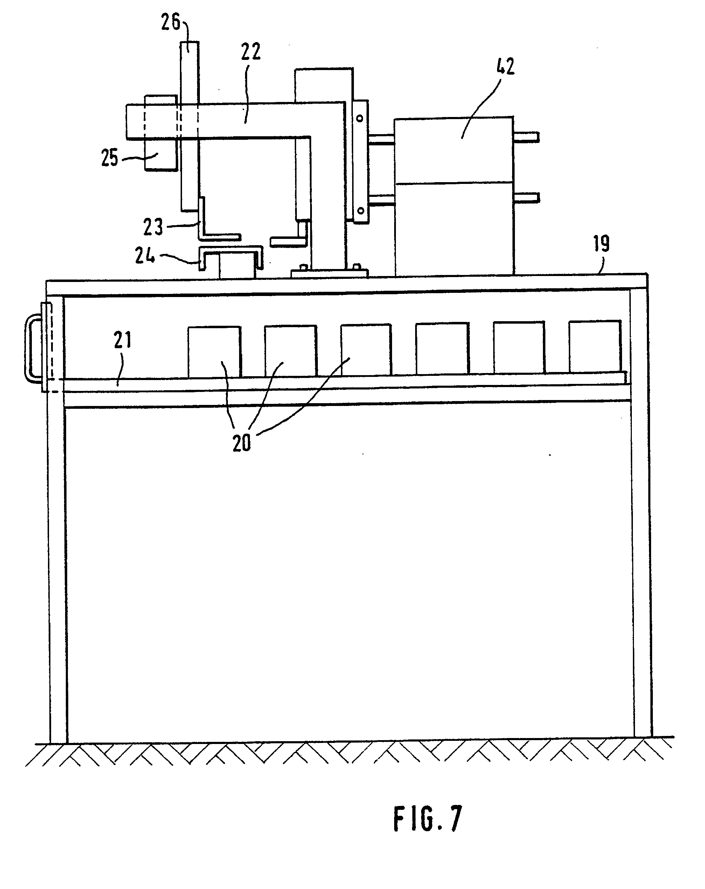

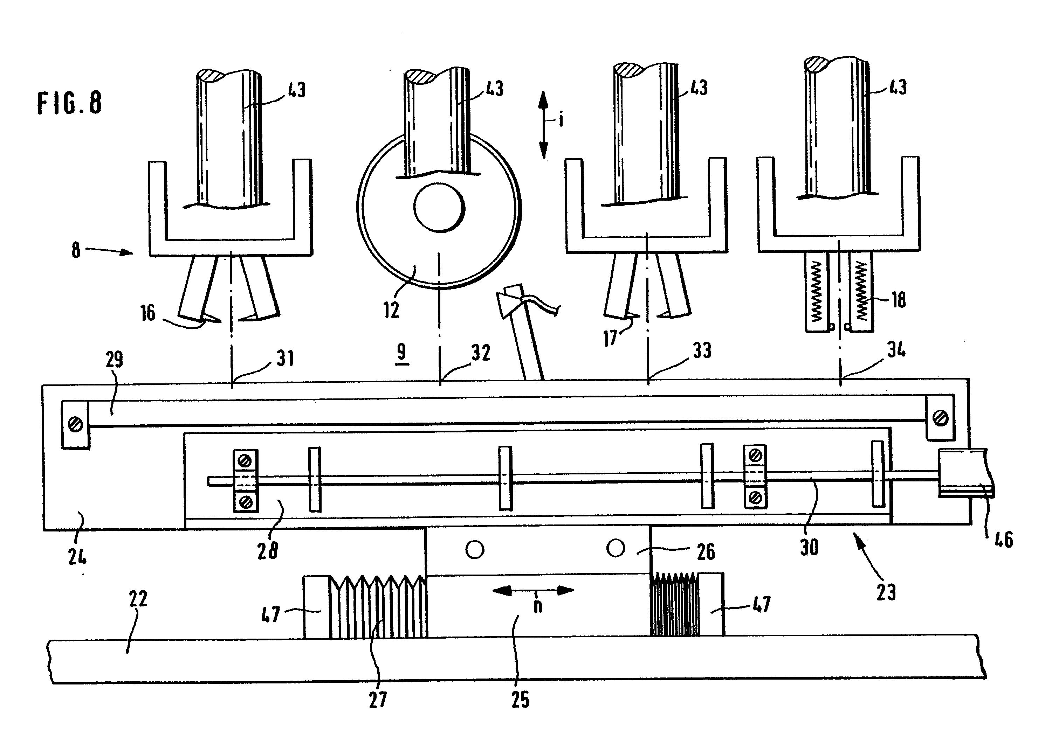

Figur 7 zeigt den Gesamtaufbau einer erfindungsgemässen Vorrichtung in stark vereinfachter Darstellungsweise. Die einzelnen, in Figur 8 noch näher erläuterten Arbeitsstationen sind nebeneinander auf einem Tisch 19 aufgebaut. Die Transportvorrichtung 23 mit den Klemmzangen ist an einem Joch 22 über der Lagerleiste 24 auf gehängt. Die einzelnen Arbeitsstationen sind entlang der Transportvorrichtung linear angeordnet, wobei jede Arbeitsstation mit einem pneumatischen Antriebselement versehen ist, um die Arbeitswerkzeuge zu betätigen. Auch die Transportvorrichtung wird pneumatisch aktiviert, so dass ersichtlicherweise eine Vielzahl von pneumatischen Steuerungselementen 20 erforderlich sind. Diese sind unter der Tischfläche in einem Einschub 21 untergebracht und somit jederzeit leicht zugänglich. Der Einschub kann auch noch weitere elektrische oder elektronische Steuerungselemente aufnehmen. Aehnlich aufgebaut wäre auch eine Vorriohtung, bei der ein Endabschnitt fest eingespannt bleibt und die einzelnen Arbeitsstationen zum Kabel geführt werden.

Figur 8 zeigt ebenfalls starkt vereinfacht eine Drauf sicht auf die Vorrichtung gemäss Figur 7. Die einzelnen Arbeitsstationen sind linear nebeneinander angeordnet, wobei an einer ersten Arbeits station 31 eine Schneidvorrichtung 8 vorgesehen ist, welche Schneidmesser 16 zum Einschneiden und Abziehen des Aussenmantels aufweist. An der zweiten Arbeitsstation 32 ist die Trennvorrichtung 9 mit der Trennscheibe 12 und mit der hier nicht sichtbaren Klemmvorrichtung 11 vorgesehen.

An der dritten Arbeitsstation 33 sind die Schneidmesser 17 zum Einschneiden des Innenmantels angeordnet und an der vierten Arbeitsstation 34 sind die beweglichen Heizbacken 18 befestigt, mit denen der eingeschnittene Innenmantel abgezogen werden kann.

Alle Arbeitswerkzeuge an den einzelnen Arbeitsstationen 31 bis 34 können entlang von Führungsstangen 43 in Pfeilrichtung i koaxial zum optischen Kabel bewegt werden.

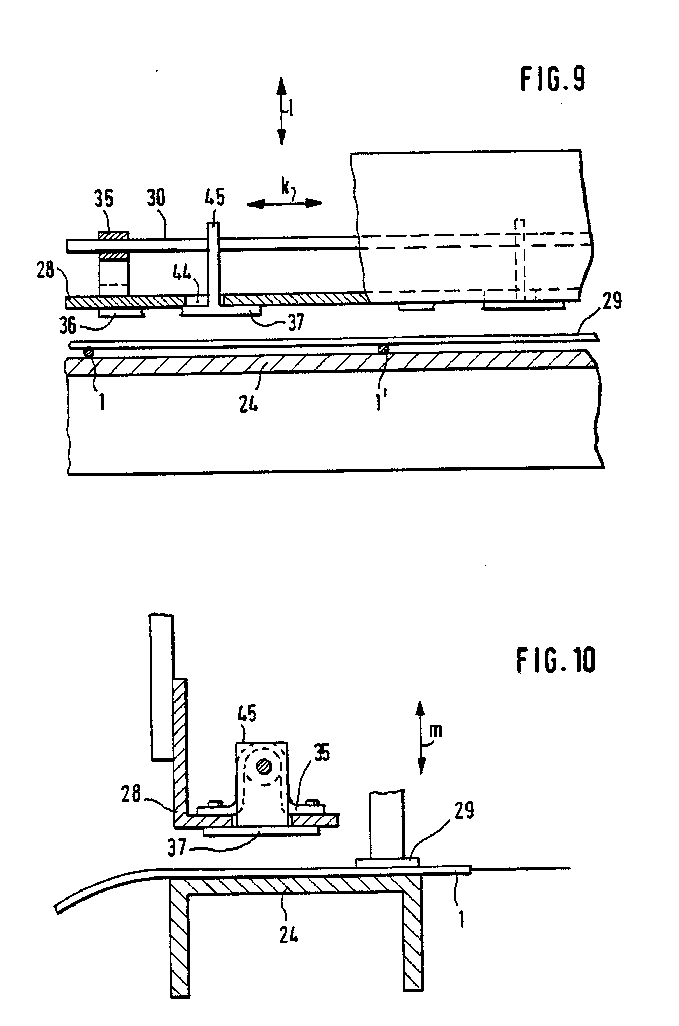

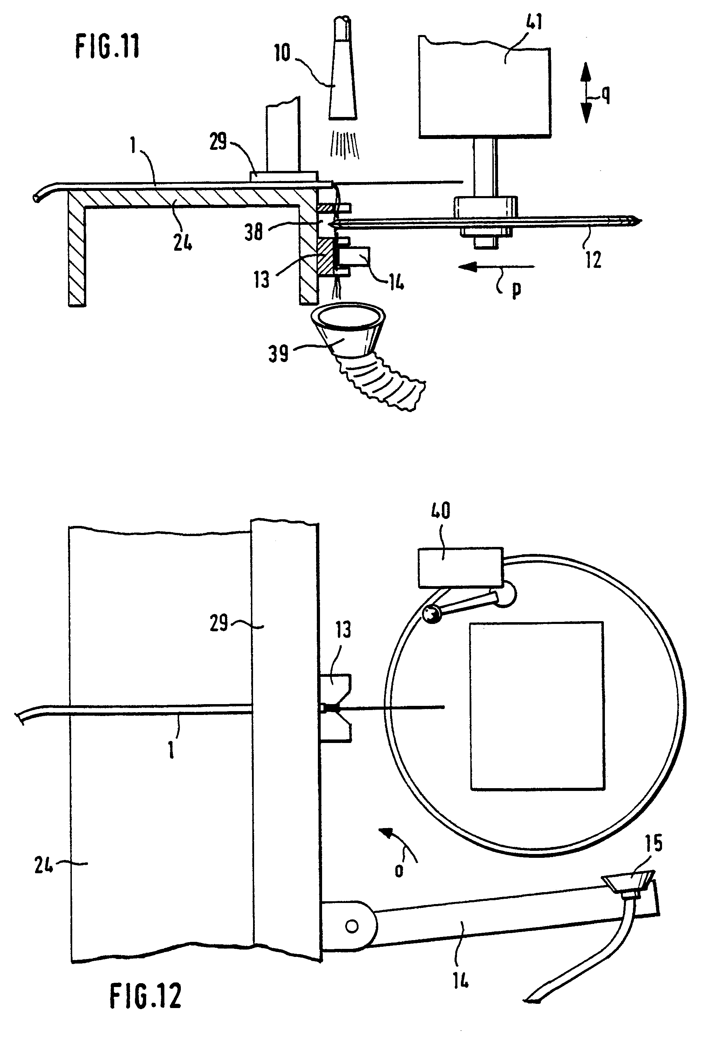

Die einzelnen Endabschnitte werden mit einer Transportvorrichtung 23 an den Arbeitsstationen vorbeigeführt, deren Einzelheiten auch noch aus den Figuren 9 und 10 ersichtlich sind. Die Transportvorrichtung besteht im wesentlichen aus einer Förderleiste 28, die im Querschnitt als etwa L-förmiges Profil ausgebildet ist. Unter der Förderleiste sind Rlemmzangen angeordnet, von denen jede eine feste Klemmbacke 36 und eine bewegliche Klemmbacke 37 aufweist. Die Klemmbacken sind halbkreisförmig gerundet, so dass sie die optischen Kabel 1 erfassen können. Die beweglichen Klemmbacken 37 sind mit einer Halterung 45 versehen, welche durch eine Oeffnung 44 in der Förderleiste 28 nach oben ragt. Alle Halterungen 45 der einzelnen Klemmzangen sind fest mit einer gemeinsamen Schubstange 30 verbunden, die z.B. mit einem Pneumatikzylinder 46 in Pfeilrichtung k hin und her bewegbar ist. Die Schubstange 30 ist in Gleitlagern 35 geführt, die auf der Förderleiste 28 befestigt sind. Ersichtlicherweise können so alle beweglichen Klemmbacken 37 gleichzeitig gegen die festen Klemmbacken 36 bzw. von diesen weg bewegt werden.

Die Förderleiste 28 ist an einem Vertikalvorschub 26 auf gehängt und kann an diesem in Pfeilrichtung 1 planparallel zur darunter angeordneten Lagerleiste 24 auf und ab bewegt wer den. Der Vertikalvorschub 26 ist seinerseits mit einem Horizontalvorschub 25 verbunden, an dem die gesamte Anordnung in Pfeilrichtung n hin und her bewegt werden kann. Vertikalvorschub und Horizontalvorschub sind vorzugsweise ebenfalls pneumatische Antriebselemente. Der Horizontalvorschub 25 ist am Joch 22 befestigt, das sich über die gesamte Länge der Lagerleiste 24 erstreckt. Zwischen den festen Seitenteilen 47 am Joch 22 und dem Horizontalvorschub 25 ist ein Faltenbalg 27 als Schutzvorrichtung angeordnet.

Mit Hilfe der Transportvorrichtung 23 kann ein auf der Lagerleiste 24 liegendes optisches Kabel 1 erfasst, angehoben und in einem Vorschubtakt bei einer nachfolgenden Arbeitsstation wieder auf die Lagerleiste 24 abgelegt werden. Die Klemmzangen werden alle gemeinsam geöffnet und die Transportleiste 28 pendelt in einem Reversiertakt wieder zurück, um sämtliche Kabel um eine Station weiter zu transportieren. Damit die Kabel beim Ausführen des Reversiertaktes auf der Lagerleiste 24 fixiert bleiben, ist eine pneumatisch aktivierbare Niederhalteleiste 29 vorgesehen, welche planparallel zur Lagerleiste 24 in Pfeilrichtung m auf und ab bewegt werden kann. Beim Ausführen des Reversiertaktes wird die Niederhalteleiste 29 nach unten gepresst, so dass alle in der Transportvorrichtung eingeführten Kabel auf der Lagerleiste 24 festgeklemmt werden. Zum Ausführen des Fördertaktes wird die Niederhalteleiste 29 angehoben, so dass sie den Weitertransport der Kabel nicht behindert.

Die zweite Arbeitsstation 32 mit der Trennvorrichtung 9 ist in den Figuren 11 und 12 etwas genauer dargestellt. Figur 11 zeigt das auf der Lagerleiste 24 fixierte optische Kabel 1, über dessen Endabschnitt die Düse 10 angeordnet ist. Die Düse 10 ist vorzugsweise eine Schlitzdüse, so dass in einem bestimmten Bereich alle Fasern nach unten weggeblasen werden. Der Fasermantel kommt derart in ein Klemmlager 13 zu liegen, das etwa V-förmige Aufnahmeöffnungen aufweist. Das Klemmlager 13 hat einen Halteabschnitt 38, in dem der Fasermantel frei gespannt werden kann. Ein Schwenkarm 14 ist an der Lagerleiste 24 angelenkt und kann in Pfeilrichtung o pneumatisch gegen das Klemmlager 13 geschwenkt werden. Am freien Ende des Schwenkarms 14 ist eine zusätzliche Blasdüse 15 angeordnet, so dass auch noch leicht abstehende Fasern in das Klemmlager 13 gepresst werden. Nach dem Schliessen der Klemmvorrichtung wird die Trennscheibe 12 mitsamt ihrem Antrieb 41 in Pfeilrichtung p gegen den Halteabschnitt 38 bewegt. Im Verlauf dieser Vorschubbewegung wird ein fest angeordneter Schalter 40 aktiviert, der den Antrieb 41 in Gang setzt. Die Trennscheibe 12 wird somit erst in Bewegung versetzt, wenn der Fasermantel bereits eingeklemmt ist. So werden keine unnötigen Turbulenzen erzeugt. Nach dem Durchtrennen des Fasermantels wird der Schwenkarm 14 wieder ausgefahren und die abgetrennten Fasern werden durch eine Saugdüse 39 angesaugt und abgeführt. Die Vorrichtung bleibt somit frei von Verunreinigungen. Um die Restlänge des verbleibenden Faserbarts einstellen zu können, ist die Trennscheibe 12 in Pfeilrichtung q höhenverstellbar angeordnet.

Nach dem Abschliessen des Trennvorgangs wird der Endabschnitt zur nachfolgenden Arbeitsstation 33 weitertransportiert. Nach dem letzten Arbeitsgang in der vierten Arbeitsstation 34 wird der abisolierte Endabschnitt durch die Transportvorrichtung ausgeworfen und kann manuell entfernt werden. Zwischen den einzelnen Arbeitsstationen können eventuell Zwischenstationen angeordnet sein, welche entweder unbestückt bleiben oder an denen ebenfalls bestimmte Vorrichtungen wie z.B. Blasdüsen, Heizungen oder Sprühdüsen angeordnet sein können. Die Zwischenstationen können auch der visuellen Kontrolle dienen.

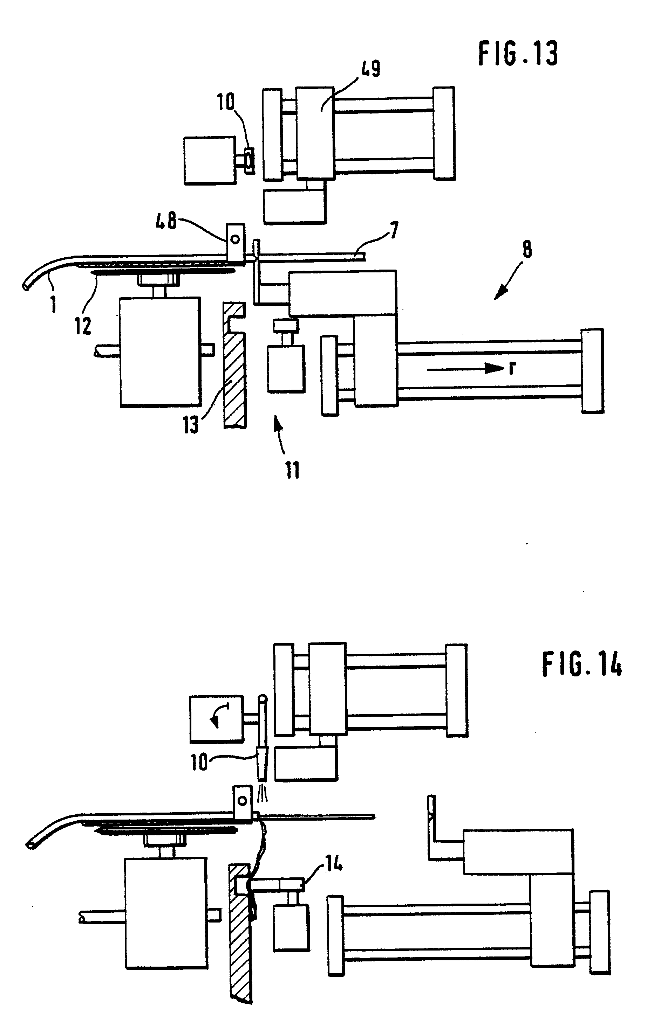

In den Figuren 13 bis 16 ist stark vereinfacht ein alternatives Ausführungsbeispiel einer Vorrichtung dargestellt, bei dem die Endabschnitte nicht in einer Transportvorrichtung verschiedene Arbeitsstationen anlaufen. Die Endabschnitte werden stationär eingespannt und die einzelnen Arbeitsschritte werden ausgeführt, indem die einzelnen Arbeitswerkzeuge aus einer Ruheposition an den Endabschnitt herangeführt werden. Die Figuren 13 bis 15 zeigen Seitenansichten der Vorrichtung in verschiedenen Arbeitsstadien.

Wie in Figur 13 dargestellt, ist das optische Kabel 1 in einer stationären Einspannstelle 48 eingespannt, die z.B. durch eine Klemmzange gebildet werden kann. Unmittelbar unterhalb der Einspannstelle ist die Klemmvorrichtung 11 mit dem Klemmlager 13 angeordnet. Aehnlich wie bei der ersten Arbeitsstation 31 gemäss Figur 8 ist die Schneidvorrichtung 8 zum Lichtwellenleiter achsparallel verschiebbar etwas unterhalb der Ebene der Einspannstelle 48 angeordnet. Aus Platzgründen ist die Trennscheibe 12 gegenüber der Schneidvorrichtung 8 auf der anderen Seite des Klemmlagers 13 angeordnet.

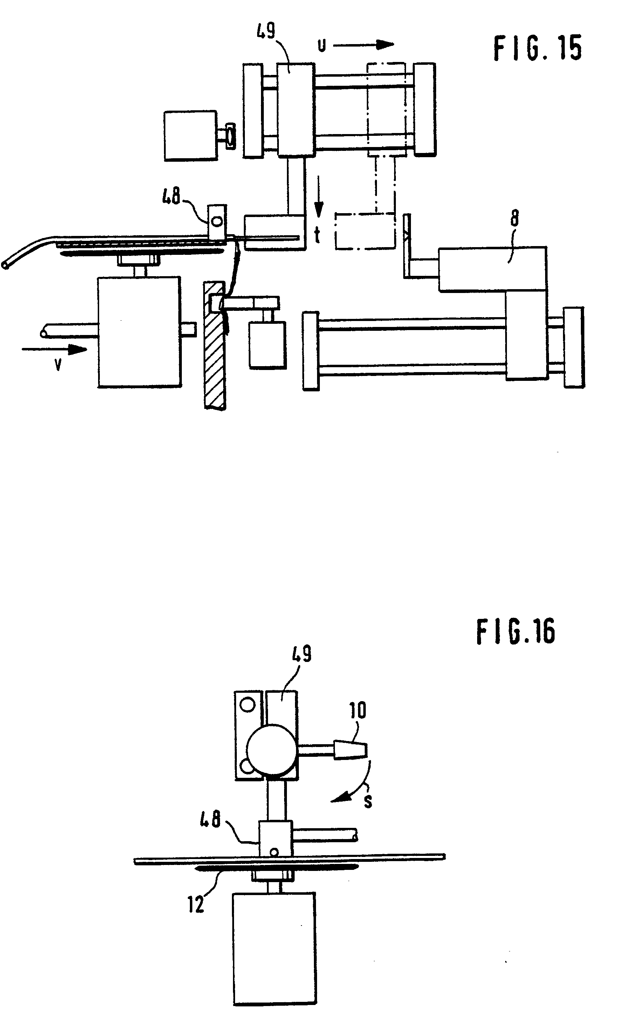

Ueber dem eingespannten Endabschnitt befindet sich eine weitere Trennvorrichtung 49 zum Einschneiden und Abziehen des Innenmantels. Die Düse 10 kann, wie aus Figur 16 ersichtlich ist, in Pfeilrichtung s ein- und ausgeschwenkt werden, so dass sie die Funktion der Schneidvorrichtung 8 nicht behindert.

Gemäss Figur 13 hat die Schneidvorrichtung 8 den Aussenmantel 7 eingeschnitten und wird nun in Pfeilrichtung r zurückgezogen, so dass der Aussenmantel entfernt wird. Die weitere Trennvorrichtung 49, die Düse 10, die Trennscheibe 12 und der Schwenkarm der Klemmvorrichtung 11 befinden sich in Ruhestellung.

Nach diesem Arbeitsgang wird gemäss Figur 14 die Düse 10 gegen das optische Kabel 1 heruntergeschwenkt und aktiviert, so dass der Fasermantel nach unten an das Klemmlager 13 geblasen wird. Jetzt wird die Klemmvorrichtung aktiviert, wobei der Schwenkarm 14 gegen das Klemmlager gepresst wird und den Fasermantel festklemmt. Nach dem Festklemmen des Fasermantels kann die Düse 10 wiederum hochgeschwenkt werden.

Anders als beim vorhergehenden Ausführungsbeispiel wird vor dem Abtrennen des Fasermantels zuerst der Innenmantel abgezogen. Diese Reihenfolge ist besonders dann empfehlenswert, wenn der verbleibende Faserbart relativ lang sein soll, so dass er das Abtrennen des Innenmantels behindern könnte. Zum Abtrennen des Innenmantels wird gemäss Figur 15 die weitere Trennvorrichtung 49 aktiviert, indem deren Schneidmesser in Pfeilrichtung t nach unten über den Endabschnitt gefahren wird. Das Einschneiden und Abziehen des Innenmantels erfolgt mit dem gleichen Werkzeug, indem die Messer in Pfeilrichtung u nach hinten gezogen werden. Die hintere Position ist in Figur 15 in strichpunktierten Linien dargestellt. Die Schneidvorrichtung 8 ist soweit zurückgenommen, dass sie die Aktion der weiteren Trennvorrichtung 49 nicht beeinträchtigt.

In einem weiteren, nicht mehr speziell dargestellten Arbeitsgang wird die Trennscheibe 12 zusammen mit ihrem Antrieb in Pfeilrichtung v gegen den eingeklemmten Fasermantel bewegt. Anschliessend kann der Endabschnitt wieder aus der Einspannstelle 48 entfernt werden. Die einzelnen Arbeitswerkzeuge können etwa analog zu dem bereits vorher beschriebenen Ausführungsbeispiel ausgebildet werden. Insbesondere können Verstellmöglichkeiten vorgesehen werden, so dass die Abisoliermasse a, b und c gemäss Figur 6 einstellbar sind. Für die lineare Verschiebung der einzelnen Arbeitswerkzeuge werden Führungsstangen und Pneumatikantriebe verwendet.

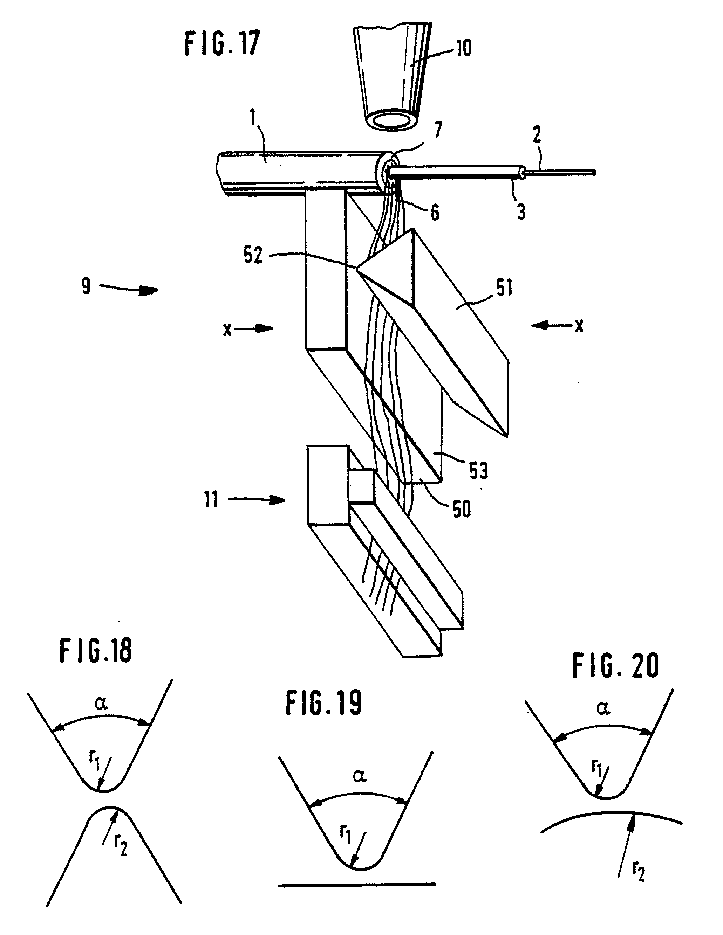

Figur 17 zeigt die bereits erwähnte alternative Möglichkeit einer Trennvorrichtung 9, die an den bisher beschriebenen Vorrichtungen anstelle der Trennscheibe vorteilhaft verwendet werden kann.

Das eigentliche Schneidwerkzeug besteht aus den beiden Backen 50 und 51, die im vorliegenden Fall als prismatische Körper ausgebildet sind. Die Backe 51 ist keilförmig ausgebildet und hat eine gerundete Kante 52. Die Backe 50 weist eine ebene Fläche 53 auf. Die beiden Backen können in Pfeilrichtung x gegeneinander gepresst werden, wobei aber auch nur eine der beiden Backen beweglich ausgebildet sein kann. Die beiden Backen können in eine konventionelle Kniehebelzange eingespannt sein, oder sie können auch Bestandteil einer Vorrichtung sein, bei der die Betätigung der Backen motorisch erfolgt. Selbstverständlich sind die beiden Backen derart präzise bearbeitet, dass im geschlossenen Zustand die Kante 52 absolut spielfrei und ohne Zwischenraum auf der Backe 50 aufliegt.

Aus der Düse 10 wird ein Luftstrahl so gegen den freigelegten Fasermantel 6 geblasen, dass dieser aus der Kabelachse auf eine Seite hin abgebogen wird und zwischen die beiden Backen 50 und 51 zu liegen kommt. Der Fasermantel wird mit Hilfe einer Klemmvorrichtung 11 in der richtigen Position festgehalten, wonach sich die beiden Backen schliessen können. Die aufzuwendende Presskraft liegt bei ca. 100 - 150 kg.

Figur 19 zeigt schematisch die in Figur 17 dargestellte Variante mit einer flächigen Backe. Die keilförmige Backe hat dabei einen Radius r1 von beispielsweise 0,1 bis 0,2mm. Der Keilwinkel $\alpha$ wird vorzugsweise etwa zwischen 60° und 80° gewählt. In Figur 20 ist eine alternative Variante dargestellt, bei welcher die eine Backe einen Radius r2 aufweist, der grösser ist als der Radius r1 der gegenüberliegenden Backe. Gemäss Figur 18 haben beide Backen etwa den gleichen Radius r1 und r2. Die Backen könnten im Querschnitt ohne weiteres auch asymmetrisch ausgebildet sein. Es wäre auch denkbar, die keilförmige Backe nicht als linearen, sondern als gekrümmten Körper auszubilden, so dass die Schneidkante 52 auf der unteren Backe abgerollt werden kann.

Der mit diesem Werkzeug ausgeführte Vorgang wird gemäss DIN-Norm Nr. 85 88 auch als Messerchneiden bezeichnet. Die keilförmige Backe hat dabei jedoch nicht etwa eine scharfe Schneide, sondern eine Keilabrundung von ca. 0,1 - 0,5mm Radius. Der Keilwinkel kann etwa zwischen 40° - 90° liegen. Besonders vorteilhaft werden die beiden Backen aus Hartmetall gefertigt, da dieses Material besonders verschleissfest ist. Es ist ausserdem wichtig, dass die Backen aus einem harten Werkstoff gefertigt sind, da sonst ein Durchtrennen der Fasern nicht möglich ist. Anstelle von Hartmetall wären aber auch andere Sinterwerkstoffe oder Keramik oder gehärteter Stahl denkbar.

Es hat sich überraschend gezeigt, dass das Trennen durch Keilschneiden zwischen zwei Backen dem sehr zähen Werkstoff des Fasermantels am besten gerecht wird. Die Fasern werden dabei nicht abgeschert, sondern auseinandergedrängt, wobei jedoch eine sehr saubere Schnittfläche erzielt wird.

Der apparative Aufwand ist relativ gering und es treten kaum Verschleisserscheinungen auf.

**Ansprüche**

1. Verfahren zum Abisolieren der Endabschnitte optischer Kabel (1), bestehend aus einem Lichtwellenleiter (2), der von einem Innenmantel (3), einem darüberliegenden Aussenmantel (7) und einem zwischen Innenmantel und Aussenmantel liegenden Fasermantel (6) umgeben ist, dadurch gekennzeichnet,

- dass zuerst der Aussenmantel (7) eingeschnitten und abgezogen wird,
- dass der freigelegte Fasermantel (6) durch Anblasen und/oder Ansaugen auf eine Seite hin weggebogen wird,
- und dass der Fasermantel (6) abgetrennt wird.

2. Verfahren nach Anspruch 1, dadurch gekennzeichnet, dass der Fasermantel nach dem Wegbiegen mit einer Klemmvorrichtung (11) gefasst und festgehalten wird.

3. Verfahren nach Anspruch 2, dadurch gekennzeichnet, dass der Fasermantel mit einer relativ zum Kabel (1) verschiebbaren Trennscheibe (12) abgetrennt wird.

4. Verfahren nach Anspruch 1 oder 2, dadurch gekennzeichnet, dass der Fasermantel zwischen zwei Backen gehalten wird, von denen wenigstens eine einen etwa keilförmigen Querschnitt aufweist, und dass die Backen bis zur vollständigen Trennung des Fasermantels gegeneinander gepresst werden.

5. Verfahren nach einem der Ansprüche 1 bis 4, dadurch gekennzeichnet, dass der Innenmantel vor oder nach dem Abtrennen des Fasermantels eingeschnitten und anschliessend ggf. unter Wärmezufuhr abgezogen wird.

6. Verfahren nach Anspruch 5, dadurch gekennzeichnet, dass die Endabschnitte durch eine Transportvorrichtung (23) erfasst und sequentiell an verschiedene Arbeitsstationen (31 bis 34) geführt werden und dass an jeder Arbeitsstation nach jedem Vorschubtakt jeweils ein Arbeitsgang ausgeführt wird.

7. Verfahren nach Anspruch 6, dadurch gekennzeichnet, dass die Endabschnitte durch Klemmzangen erfasst und an die einzelnen Arbeitsstationen geführt werden.

8. Verfahren nach Anspruch 5, dadurch gekennzeichnet, dass die Endabschnitte fest in eine Arbeitsstation eingespannt werden, und dass sequentiell verschiedene Arbeitswerkzeuge an den Endabschnitt zugeführt werden, welche jeweils einen Arbeitsgang ausführen.

9. Vorrichtung zum Abisolieren der Endabschnitte optischer Kabel, bestehend aus einem Lichtwellenleiter (2), der von einem Innenmantel (3), einem darüberliegenden Aussenmantel (7) und einem zwischen Innenmantel und Aussenmantel liegenden Fasermantel (6) umgeben ist, mit einer Schneidvorrichtung (8) zum Einschneiden und Abziehen wenigstens des Aussenmantels (7), dadurch gekennzeichnet, dass bei oder nach der Schneidvorrichtung (8) eine Trennvorrichtung (9) zum Abtrennen des Fasermantels (6) angeordnet ist, welche eine gegen den Fasermantel gerichtete Düse (10) zum Anblasen oder Ansaugen des Fasermantels, eine Klemmvorrichtung (11) zum Erfassen des Fasermantels und ein Trennelement (12) zum Abtrennen des Fasermantels aufweist.

10. Vorrichtung nach Anspruch 9, dadurch gekennzeichnet, dass die Klemmvorrichtung ein Klemmlager (13) zur Aufnahme des abgebogenen Fasermantels (6) und ein gegen das Klemmlager pressbares Klemmelement (14) aufweist.

11. Vorrichtung nach Anspruch 10, dadurch gekennzeichnet, dass das Klemmelement ein Schwenkarm (14) ist, dessen freies Ende in das Klemmlager (13) eingreift und eine zusätzliche Blasdüse (15) trägt.

12. Vorrichtung nach Anspruch 10 oder 11, dadurch gekennzeichnet, dass das Klemmlager (13) einen Halteabschnitt (38) aufweist, in dem der Fasermantel (6) bei geschlossenem Klemmelement frei spannbar ist und dass das Trennelement (12) in den Halteabschnitt einführbar ist.

13. Vorrichtung nach einem der Ansprüche 9 bis 12, dadurch gekennzeichnet, dass das Trennelement eine drehantreibbare Trennscheibe (12) ist, die relativ zur Klemmvorrichtung (11) verschiebbar gelagert ist.

14. Vorrichtung nach einem der Ansprüche 9 bis 12, dadurch gekennzeichnet, dass das Trennelement zwei gegeneinander pressbare Backen aufweist, von denen wenigstens eine einen etwa keilförmigen Querschnitt aufweist.

15. Vorrichtung nach Anspruch 14, dadurch gekennzeichnet, dass eine der Backen eine ebene Fläche aufweist, gegen welche die keilförmige Backe pressbar ist.

16. Vorrichtung nach einem der Ansprüche 9 bis 15, dadurch gekennzeichnet, dass die Schneidvorrichtung (8) und die Trennvorrichtung (9) separate Arbeitsstationen (31, 32) sind und dass wenigstens eine weitere Arbeitsstation zum Entfernen des Innenmantels (3) vorgesehen ist, wobei die Endabschnitte mit einer Transportvorrichtung (23) sequentiell zu den einzelnen Arbeitsstationen führbar sind.

17. Vorrichtung nach Anspruch 16, dadurch gekennzeichnet, dass die Transportvorrichtung (23) zum Erfassen der Endabschnitte Klemmzangen (36, 37) aufweist, welche in einem Vorschubtakt und in einem Revers iertakt pendelnd zwischen den Arbeitsstationen hin und her bewegbar sind.

18. Vorrichtung nach Anspruch 16, dadurch gekennzeichnet, dass die Transportvorrichtung zum Erfassen der Endabschnitte Klemmzangen aufweist, welche taktweise an jeder Arbeitsstation vorbeiführbar sind.

19. Vorrichtung nach einem der Ansprüche 9 bis 15, dadurch gekennzeichnet, dass im Bereich der Trennvorrichtung eine feste Einspannstelle zum Einspannen eines Endabschnittes angeordnet ist, und dass die Schneidvorrichtung und wenigstens ein weiteres Arbeitswerkzeug zum Entfernen des Innenmantels derart beweglich gelagert sind, dass sie aus einer Ruheposition in eine Arbeitsposition an die Einspannstelle führbar sind.

20. Vorrichtung nach Anspruch 19, dadurch gekennzeichnet, dass die Düse zum Anblasen oder Ansaugen des Fasermantels verschwenkbar gelagert ist.

21. Vorrichtung nach einem der Ansprüche 16 bis 20, dadurch gekennzeichnet, dass die Arbeitsstationen bzw. Arbeitswerkzeuge auf einem Tisch (19) angeordnet und pneumatisch aktivierbar sind, und dass die pneumatischen Steuerungselemente (20) als Einschub (21) unter der Tischfläche angeordnet sind.

FIG.1

FIG.2

FIG.3

# FIG. 4

# FIG. 5

# FIG. 6

FIG. 7

FIG.8

FIG.9

FIG.10

FIG.11

FIG.12

FIG.13

FIG.14

FIG. 15

FIG.16

FIG.17

10

1

7

2

3

6

52

9

X

X

51

53

50

11

FIG.18

α

$r_1$

$r_2$

FIG.19

α

$r_1$

FIG.20

α

$r_1$

$r_2$

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 735 282 (STATOMAT-GLOBE MASCHINENFABRIK) * Spalte 2, Zeile 67 - Spalte 4, Zeile 41; Figuren 1-5 * | 1-3,5-7 ,9,12, 14,16 | G 02 B 6/245 |
| A | | 10,11, 13,15, 17,18, 20 | |
| | --- | | |
| Y | GB-A-2 207 255 (STC PLC) * Ansprüche 1,6; Figur 1 * | 1-3,5-7 ,9,12, 14,16 | |
| | --- | | |
| A | US-A-3 768 143 (R. HOLMES) * Figuren 3,4,10-14; Spalte 2, Zeilen 18-23; Spalte 4, Zeile 43 - Spalte 5, Zeile 35 * | 1,9,21 | |
| | --- | | |
| A | WO-A-8 100 374 (TELECOMUNICACOES BRASILEIRAS) * Zusammenfassung; Figur * | 4,14,15 | |
| | --- | | **RECHERCHIERTE SACHGEBIETE (Int. Cl.5)** |
| A,D | DE-A-3 406 917 (PHILIPS PATENTVERWALTUNG) * Ansprüche 1,2; Figur * | 5 | G 02 B H 02 G |
| | --- | | |
| A | PATENT ABSTRACTS OF JAPAN Band 9, Nr. 259 (P-397)(1982), 17. Oktober 1985; & JP - A - 60108803 (NIPPON DENSHIN DENWA KOSHA) 14.06.1985 * ganzes Dokument * | 8,19 | |
| | --- | | |
| P,A | RESEARCH DISCLOSURE 10. Mai 1990, Seite 31367; "Kevlar Fan and Trim Device for Optical Cables" ----- | 1,9 | |

Der vorliegende Recherchenbericht wurde für alle Patentansprüche erstellt

| Recherchenort | Abschlußdatum der Recherche | Prüfer |
|---|---|---|
| BERLIN | 12-03-1991 | VON MOERS F |